(19) Europäisches Patentamt
European Patent Office
Office européen des brevets

(11) Veröffentlichungsnummer: **0 354 472 A1**

(12) # EUROPÄISCHE PATENTANMELDUNG

(21) Anmeldenummer: **89114338.0**

(22) Anmeldetag: **03.08.89**

(51) Int. Cl.[4]: **C08G 18/10 , C08G 18/12 , C08G 18/80 , C09J 175/04**

(30) Priorität: **12.08.88 DE 3827464**

(43) Veröffentlichungstag der Anmeldung: **14.02.90 Patentblatt 90/07**

(84) Benannte Vertragsstaaten: **ES**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Schulte, Heinz-Günther, Dr.**
**Winsterstrasse 66**
**D-4330 Mülheim 13(DE)**
Erfinder: **Onusseit, Hermann, Dr.**
**Kiefernweg 36**
**D-4010 Hilden(DE)**

(54) **Alkoxysilanterminierte, feuchtigkeitsvernetzende Schmelzkleber sowie ihre Verwendung als Klebe- und Dichtmassen.**

(57) Alkoxysilanterminierte, feuchtigkeitsvernetzende Schmelzkleber, erhältlich durch Umsetzung von NCO-terminierten Alkoxysilanverbindungen mit linearen OH- und/oder $NH_2$-terminierten difunktionellen Polymeren, ergeben verbesserte klebetechnische Eigenschaften im Vergleich zu herkömmlichen alkoxysilanterminierten Schmelzklebern.

EP 0 354 472 A1

# Alkoxysilanterminierte, feuchtigkeitsvernetzende Schmelzkleber sowie ihre Verwendung als Klebe- und Dichtmassen

Die Erfindung betrifft alkoxysilanterminierte, feuchtigkeitsvernetzende Schmelzkleber.

Unter feuchtigkeitsvernetzenden Schmelzklebern versteht man im allgemeinen lösemittelfreie Klebstoffe, die nach dem Auftragen auf ein Substrat ihre Endfestigkeit und Wärmestandfestigkeit erreichen, indem sie mit Wasser aus der Atmosphäre oder dem Substrat nachhärten. Die mit Wasser reagierenden Gruppen sind im allgemeinen NCO-Gruppen, vgl. DE-B 24 01 320, EP-B 00 19 159, DE-A 32 36 313, DE-A 33 39 981, US-B 3 991 025, US-B 3 931 077, US-B 4 166 873, EP-A 0 125 008, EP-A 0 125 009.

Weiterhin ist bekannt, daß man feuchtigkeitshärtende Schmelzkleber erhalten kann, wenn man freie NCO-Gruppen von Prepolymeren mit gamma-Aminoalkyl-trialkoxysilanen umsetzt, wobei die Aushärtung dann über die $Si(OR)_3$-Endgruppen erfolgt, vgl. DE-OS 35 18 357. H.F. Huber und H. Müller berichteten in einem Vortrag auf dem 11. Münchener Klebstoff- und Veredelungsseminar über einen feuchtigkeitshärtenden Schmelzkleber, der aus einem Polyester als Grundgerüst mit freien OH-Gruppen aufgebaut wurde, und zwar in der Weise, daß die OH-Gruppen zunächst mit mehrfunktionellen Isocyanaten im Überschuß umgesetzt wurden. Die dann vorhandenen freien NCO-Gruppen wurden anschließend mit gamma-Aminoalkyl-trialkoxysilanen zu sogenannten Silanschmelzklebstoffen umgesetzt. Ähnlich aufgebaute Schmelzklebersysteme sind aus den japanischen Patentanmeldungen 80 160 074 (C.A. 94, 15 79 92p (1981)), 59 24 767 (C.A. 101, 73 931t (1984)), 59 221 366 (C.A. 102, 150611p (1985)), 59 172 573 (C.A. 102, 96632f (1985)) und 59 174 674 (C.A. 102, 63283q (1985)) bekannt.

Feuchtigkeitsvernetzende Schmelzkleber, die freie NCO-Gruppen aufweisen, sind temperaturempfindlich und vernetzen beim Überschreiten einer zulässigen Höchsttemperatur zu unlöslichen und unschmelzbaren Polymeren. Die Anwendungstemperaturen für diese Kleber sind daher relativ niedrig. Zudem lassen sich häufig auch unmittelbar nach der Applikation noch keine besonderen Festigkeiten bei Raumtemperatur erzielen, obwohl dies ein wesentliches Kriterium für Schmelzkleber darstellt. Derartige Systeme ergeben zwar nach der Aushärtung sehr hohe Klebefestigkeiten, können jedoch bei Applikationstemperaturen von 100 bis 140 °C Isocyanate freisetzen. Sie werden daher bei möglichst niedrigen Temperaturen aufgetragen, was niedrige Molekulargewichte mit geringer Anfangsfestigkeit bedingt.

Alkoxysilangruppen-terminierte Klebesysteme, z.B. gemäß DE-C 3 518 357, weisen unbefriedigende klebtechnischen Eigenschaften auf; vgl. H.F. Huber, H. Müller, Adhes. Age 30 (11), 32 (1987).

Die Erfindung ist somit auf Schmelzkleber der eingangs genannten Art gerichtet, die nach erfolgter Vernetzung thermisch belastbare Verklebungen ermöglichen, bei Verarbeitungstemperaturen keine Isocyanate freisetzen, eine gute Viskositätsstabilität der Schmelze und Unempfindlichkeit gegenüber Überhitzung zeigen sowie gute Kunststoffhaftung- und Endfestigkeiten aufweisen.

Diese Aufgabe wird erfindungsgemäß durch alkoxysilanterminierte, feuchtigkeitsvernetzende Schmelzkleber gelöst, die durch Umsetzung von

a) NCO-terminierten Silanverbindungen der Formel I

$OCN\text{-}R^1\text{-}NHCO\text{-}(O\text{-}R^2\text{-}O\text{-}CONH\text{-}R^3\text{-}NHCO)_m\text{-}X\text{-}(CH_2)_n\text{-}Si(R^4)_p\text{-}(OR^5)_{3\text{-}p}$ (I)

in der

$R^1$ und $R^3$ einen Rest aus der von acyclischem oder cyclischem Alkylen mit 5 bis 14 Kohlenstoffatomen, Arylen, Diarylenalkan und dialkylensubstituiertem Aryl gebildeten Gruppe,

$R^2$ einen Alkylenrest mit 2 bis 12 Kohlenstoffatomen,

$R^4$ eine Alkylgruppe mit 1 bis 4 Kohlenstoffatomen,

$R^5$ einen Rest aus der von Alkyl mit 1 bis 4 Kohlenstoffatomen und Alkoxyalkylen mit 2 bis 5 Kohlenstoffatomen,

m die Zahl 0 oder 1,

n eine Zahl von 1 bis 4,

p die Zahl 0, 1 oder 2 und

X eine Gruppe der Formel -S- oder $-NR^6-$, in der $R^6$ Wasserstoff, Alkyl mit 1 bis 4 Kohlenstoffatomen, Aminoethylen, Aryl oder einen Rest der Formel II

$-(CH_2)_n\text{-}Si(R^4)_p(OR^5)_{3\text{-}p}$ (II)

in der $R^4$, $R^5$, m und p wie oben definiert sind,

bedeuten,

mit

b) linearen OH- und/oder $NH_2$-terminierten difunktionellen Polymeren mit OH- bzw. $NH_2$-Zahlen im Bereich von 6 bis 20, insbesondere 8 bis 15, erhältlich durch Umsetzung von linearen OH- und/oder $NH_2$-terminierten Polyestern, Polyethern und/oder Polyurethanen mit Diisocyanaten der Formel III

OCN-$R^7$-NCO (III)
in der $R^7$ wie $R^1$ und $R^3$ definiert ist, bzw. Mischungen derselben,
in Molverhältnissen von OH- und/oder $NH_2$-Gruppen der difunktionellen Polymeren zu NCO-Gruppen der NCO-terminierten Silanverbindungen der Formel I von 0,9:1 bis 2:1, insbesondere etwa 1:1, erhältlich sind.

Wie aus der allgemeinen Formel I erkennbar, leiten sich die Reste $R^1$ bzw. $R^3$ von Diisocyanaten der Formeln OCN-$R^1$-NCO bzw. OCN-$R^3$-NCO ab, wobei $R^1$ und $R^3$ gleich oder verschieden sein können. Typische Beispiele für derartige Diisocyanate sind Toluylidendiisocyanate(TDI), insbesondere technische Gemische des 2,4- und 2,6-Isomeren, Diphenylmethandiisocyanat(MDI), 1,6-Hexamethylendiisocyanat, Naphthylendiisocyanat, Xylylendiisocyanat, Isophorondiisocyanat (2,4,4-Trimethyl-1,6-diisocyanato-hexan, IPDI), dimeres Toluylendiisocyanat-2,4 sowie Cyclohexylendiisocyanat und Dicyclohexylmethandiisocyanat. Bevorzugt bedeuten $R^1$ und $R^3$ Reste aus der von Toluyliden, Hexamethylen, Naphthylen, Xylylen, Cyclohexylen, Diphenylenmethan und Isophoronylen gebildeten Gruppe.

Besonders bevorzugt ist es, wenn sich die Reste $R^1$ und $R^3$ von Diisocyanaten der Formel OCN-$R^1$-NCO bzw. OCN-$R^3$-NCO ableiten, deren Isocyanatgruppen unterschiedliche Reaktivitäten aufweisen. Bevorzugte Vertreter für derartige Diisocyanate sind Isophoronylen- und Toluylendiisocyanat (einschließlich der an dem 2,4-Isomeren-reichen technischen Gemische desselben mit dem 2,6-Isomeren).

Die Gruppe $R^2$ der allgemeinen Formel I ist von einem insbesondere linearen Alkylendiol mit 2 bis 12 Kohlenstoffatomen abgeleitet; insbesondere von Ethylenglykol, Butandiol-1,4, Hexandiol-1,6, Octandiol-1,8, Decandiol-1,10 und Dodecandiol-1,12. Besonders bevorzugt sind die hier genannten Alkylendiole mit 2 bis 6 Kohlenstoffatomen.

Die Gruppe $R^4$ kann eine Methyl-, Ethyl-, Propyl- oder Butylgruppe sein; Methyl- oder Ethylgruppen sind hier bevorzugt.

Die Gruppe $R^5$ kann eine Methyl-, Ethyl-, Propyl- oder Butylgruppe bzw. eine Alkoxyalkylengruppe wie Methoxymethylen, Methoxyethylen oder Methoxypropylengruppe sein. Methyl- oder Ethylgruppen sind hier bevorzugt.

Die Gruppe $R^7$ kann die oben für $R^1$ und $R^3$ angegebenen Bedeutungen aufweisen; ein besonders bevorzugtes Diisocyanat der Formel III ist Diphenylmethandiisocyanat (4,4′-Diisocyanatodiphenylmethan; MDI), das temperaturresistente "Hartsegmente" in den Schmelzklebern ergibt.

Die Gruppe X der allgemeinen Formel I kann die oben angegebenen Bedeutungen aufweisen; im Falle von X = -$NR^6$- kann $R^6$ Wasserstoff, Alkyl mit 1 bis 5 Kohlenstoffatomen, insbesondere Methyl, Ethyl, Propyl und Butyl, Aminoethylen, Aryl, insbesondere, Phenyl, oder einen Rest der obigen Formel II bedeuten, wobei im letzteren Falle die Bedeutungen bzw. Werte für $R^4$, $R^5$, m und p die gleichen sind wie für die Silanfunktion gemäß der allgemeinen Formel I. NCO-terminierte Silanverbindungen der Formel I können erhalten werden, indem man eine Silanverbindung der allgemeinen Formel IV
$HX-(CH_2)_n-Si(R^4)_p(OR^5)_{3-p}$ (IV)
in der $R^4$, $R^5$, X, n und p wie oben definiert sind, mit Diisocyanaten der Formel
OCN-$R^1$-NCO bzw.
OCN-$R^1$-NHCO-O-$R^2$-O-CONH-$R^3$-NCO
umsetzt, wobei $R^1$, $R^2$ und $R^3$ wie oben definiert sind. Besonders bevorzugte Bedeutungen für die Silanverbindungen der Formel IV sind $R^4$ = $R^5$ = Methoxy und/oder Ethoxy, n = 3, p = 0 oder 1 und X = -NH- oder S. Typische Beispiele für Silanverbindungen der allgemeinen Formel IV sind
gamma-Aminopropyltrimethoxysilan,
gamma-Aminopropyltriethoxysilan,
N-Methyl-gamma-aminopropyltrimethoxysilan,
N-Phenyl-gamma-aminopropyltrimethoxysilan,
Di-[1-propyl-3(trimethoxysilyl)]-amin und
N-Methyl-gamma-aminopropylmethyl-dimethoxysilan.

Diese Verbindungen sind im Handel erhältlich.

Die für die Umsetzung mit den NCO-terminierten Silanverbindungen der Formel I vorgesehenen linearen OH- und/oder $NH_2$-terminierten Polymeren mit OH- bzw. $NH_2$-Zahlen im Bereich von 6 bis 20, insbesondere 8 bis 15, können durch Umsetzung von linearen OH- und/oder $NH_2$-terminierten Polyestern, Polyethern und/oder Polyurethanen mit Diisocyanaten der Formel III
OCN-$R^7$-NCO (III)
in der $R^7$ wie oben definiert ist bzw. Mischungen derselben erhalten werden, wobei die Molverhältnisse von OH- und/oder $NH_2$-Gruppen zu NCO-Gruppen 1,2:1 bis 1,8:1, vorzugsweise 1,4:1 bis 1,6:1, betragen.

Typische Vertreter für lineare OH-terminierte Polyester sind solche, die durch Kondensation von Dicarbonsäuren aus der von Oxal-, Malon-, Dimethylmalon-, Bernstein-, Glutar-, Adipin-, Trimethyladipin-, Pimelin-, 2,2-Dimethylglutar-, Azelain-, Sebacin-, Fumar-, Malein-, Itacon-, 1,3-Cyclopentandicarbon-, 1,2-Cyclohexandicarbon-, 1,3-Cyclopentandicarbon-, 1,4-Cyclohexandicarbon-, Phthal-, Terephthal-, Isophthal-, 2,5-Norbornandicarbon-, 1,4-Naphthalindicarbon-, Diphen-, 4,4,-Oxydibenzoe-, Diglykol-, Thiodipropion-, 4,4,-Sulfonyldibenzoe-, 2,5-Naphthalindicarbon- und Tricyclodecandicarbonsäure sowie Estern, Säurehalogeniden oder Anhydriden derselben gebildeten Gruppe mit Diolen aus der von Ethan-, Propan-1,2-, Propan-1,3-, Butan-1,2-, Butan-1,4-, Pentan-1,2-, Pentan-1,4-, Pentan-2,4 , Hexan-1,2-, Hexan-1,5-, Hexan-1,6-, Hexan-2,5-, Heptan-1,7- und Octan-1,8-diol, Neopentylglykol sowie von 1,2-, 1,3- und 1,4-Cyclohexandimethanol gebildeten Gruppe erhältlich sind.

Besonders bevorzugt sind hier teilkristalline, flüssige oder amorphe Polyester einschließlich Mischungen derselben auf Basis von Terephthal-, Isophthal-, Malon-, Bernstein-, Glutar-und/oder Adipinsäure einerseits und Ethylenglykol, Diethylenglykol, Propylenglykol, Butandiol-1,4, Hexandiol-1,6 und/oder Neopentylglykol andererseits, die OH-Zahlen zwischen 5 bis 200, vorzugsweise 10 bis 100 und besonders bevorzugt 15 bis 60 aufweisen. Diese OH-terminierten Polyester sind im Handel erhältlich. Zu den obengenannten linearen OH-terminierten Polyethern gehören insbesondere Polyalkylenglykole wie Polyethylenglykol, Polypropylenglykol und Polytetrahydrofuran mit Zahlenmitteln der Molmassen zwischen 400 und 5000.

Von den obengenannten $NH_2$-terminierten Polyethern sind insbesondere $NH_2$-terminierte Polypropylenglykole mit Zahlenmitteln der Molmassen zwischen 200 und 3000 bevorzugt. Im übrigen können hier auch OH-terminierte, lineare Polyurethane eingesetzt werden, die aus Diisocyanaten der obengenannten Art mit einem Überschuß an Diolen der obengenannten Art erhältich sind.

Lineare OH- und/oder $NH_2$-terminierte Polymere mit OH- bzw. $NH_2$-Zahlen im Bereich von 6 bis 20, insbesondere 8 bis 15, sind bekannte Produkte, die größtenteils im Handel erhältlich sind. Wenn sie - was in vielen Fällen bevorzugt ist - in Form von Gemischen eingesetzt werden, reicht es aus, wenn das Gesamtgewicht die vorgenannten OH- bzw. $NH_2$-Zahlen aufweist, so daß auch gewisse Anteile an OH- und/oder $NH_2$-terminierten Polymeren zugesetzt werden können, deren OH- bzw. $NH_2$-Zahlen außerhalb der vorgenannten Bereiche liegen.

Besonders bevorzugt ist es, als lineare OH-terminierte Polymere Umsetzungsprodukte von Isocyanaten der allgemeinen Formel III mit Gemischen von

a) linearen OH-terminierten Polyestern und

b) linearen OH-terminierten Polyethern in Gewichtsverhältnissen von a:b von 20:80 bis 99:1, vorzugsweise 50:50 bis 90:10 und insbesondere 80:20 bis 88:12 einzusetzen; die damit letztlich erhältlichen Schmelzkleber weisen im ausgehärteten Zustand eine verbesserte Dehnbarkeit und Adhäsion auf.

Die alkoxysilanterminierten feuchtigvernetzenden Schmelzkleber der Erfindung können hergestellt werden, indem man die linearen OH- und/oder $NH_2$-terminierten Polymeren mit OH- bzw. $NH_2$-Zahlen im Bereich von 6 bis 20, insbesondere von 8 bis 15, vorlegt und die NCO-terminierten Silanverbindungen der Formel I in den angegebenen Molverhältnissen von OH- und/oder $NH_2$-Gruppen der difunktionellen Polymeren zu NCO-Gruppen der Silanverbindungen der Formel I zusetzt sowie unter erhöhten Temperaturen zur Reaktion bringt, bis der Anteil an freien NCO-Gruppen im Reaktionsgemisch auf 0 bzw. nahezu 0 abgesunken ist.

Die so erhaltenen alkoxysilanterminierten feuchtigkeitsvernetzenden Schmelzkleber der Erfindung können mit üblichen sauren Katalysatoren versetzt werden, die z.B. aus der von Zinn-II-octoat, Dibutylzinndilaurat, Tetrabutyl-titanat, Zinkacetat und Zinkacetylacetonat oder dergleichen gebildeten Gruppe ausgewählt sind; derartige Katalysatoren sind dem Fachmann geläufig, vgl. z.B. Ullmann, Enzyklopädie der technischen Chemie, Band 21, Seite 523 ff. oder E. Skeist, Handbook of Adhesives, van Nostrand, 1976, Seite 630.

Der Aufbau der Schmelzkleber der Erfindung kann wie folgt dargestellt werden: Lineare OH-terminierte Polyester, Polyether und/oder Polyurethane (entsprechendes gilt für $NH_2$-terminierte Verbindungen) werden in den angegebenen Molverhältnissen mit Diisocyanaten der Formel III zu einem OH-terminierten Polymeren der folgenden allgemeinen Formel IV gemäß dem folgenden Reaktionsschema umgesetzt, wobei U Urethangruppierungen und D Reste der linearen OH-terminierten Polyester, Polyether und/oder Polyurethane symbolisieren:

HO-D-OH + OCN-NCO --->

HO-D-U-D-U-D-OH (IV)

Es ist zu beachten, daß es sich hier nur um eine symbolische Darstellung handelt; die tatsächliche

mittlere Kettenlänge bzw. Anzahl von U- bzw. D-Einheiten in der Kette ergibt sich aus den eingesetzten Molverhältnissen von OH zu NCO.

Die OH-terminierten linearen Polymeren IV werden anschließend mit NCO-terminierten Silanverbindungen der Formel I zu im wesentlichen NCO-Gruppen-freien silanterminierten Schmelzklebern der symbolisierten Formel V

$$\equiv Si--U-D-U-D-U-D-U--Si\equiv \qquad (V)$$

$$(\equiv Si: -X-(CH_2)_n-Si(R^4)_p(OR^5)_{3-p},$$

$$--\ :\ -(O-R^2-O-CONH-R^3-NHCO)_m-\ )$$

umgesetzt.

Bedingt durch das gegenüber alkoxysilanterminierten Schmelzklebern aus dem Stand der Technik erhöhte Molekulargewicht der Schmelzkleber der Erfindung gestatten diese eine hohe Anfangs-und Endfestigkeit. Die für die Bearbeitung erforderliche höhere Applikationstemperatur ermöglicht auch eine gute Haftung auf Kunststoffsubstraten.

Die Erfindung wird im folgenden anhand von bevorzugten Ausführungsbeispielen sowie von Vergleichsbeispielen näher erläutert.

Es werden die folgenden Abkürzungen verwendet:

Polyester I: teilkristalliner OH-Gruppen-terminierter Polyester auf Basis von Terephthalsäure, Isophthalsäure, Bernsteinsäure, Butandiol und Hexandiol mit einem Zahlenmittel der Molmassen von ca. 3700, einer Glasübergangstemperatur(Tg) von -20 °C, einer OH-Zahl(mg KOH/g) von 30 und einem Fließpunkt von +105 °C;

Polyester II: teilkristalliner OH-terminierter Polyester auf Basis von Adipinsäure und Hexandiol, Zahlenmittel der Molmasse ca. 3700, OH-Zahl 30, Tg -60 °C, Fließpunkt +65 °C;

Polyester III: flüssiger OH-terminierter Polyester auf Basis von Adipinsäure, Hexandiol, Neopentylglykol und Ethylenglykol, Zahlenmittel der Molmasse ca. 5600, Tg -50 °C, OH-Zahl 20;

Polyester IV: amorpher OH-terminierter Polyester auf Basis von Terephthalsäure, Isophthalsäure, Adipinsäure, Ethylenglykol und Neopentylglykol, Zahlenmittel der Molmasse ca. 3200, OH-Zahl 35, Tg +30 °C, Fließpunkt +70 °C;

Polyester V: teilkristalliner OH-terminierter Polyester auf Basis von Terephthalsäure, Bernsteinsäure, Butandiol, Hexandiol und einer weiteren Komponente, Zahlenmittel der Molmasse ca. 25000, OH-Zahl ca. 5;

PPG 1000: Polypropylenglykol mit einem Zahlenmittel der Molmasse von 1000;

PTHF 650, 1000, 2000: Polytetrahydrofuran mit einem Zahlenmittel der Molmasse von 650, 1000 bzw. 2000;

Polyamin: Aminterminiertes Polypropylenglykol mit einem Zahlenmittel der Molmasse von 2000;

TDI: Toluylidendiisocyanat(überwiegend das 2,4-Isomere enthaltendes technisches Gemisch);

IPDI: Isophorondiisocyanat;

MDI: Diphenylmethandiisocyanat(überwiegend das 4,4'-Isomere enthaltendes technisches Gemisch).

Sämtliche der in den Beispielen verwendeten Komponenten sind handelsüblich.

Beispiel 1.

a) Addukt aus IPDI, gamma-Aminopropyltriethoxysilan und Butandiol-1,4.

In einem Dreihalskolben wurden unter Rühren und Feuchtigkeitsausschluß bei 214 mmol(47,4 g) IPDI vorgelegt; innerhalb von 30 min wurden 107 mmol(9,6 g) Butandiol-1,4 sowie nach weiteren 30 min 107 mmol(23,8 g) gamma-Aminopropyltriethoxysilan zugetropft. Nach weiteren 30 min war ein NCO-Wert von 5,2±0,3% erreicht.

b) Herstellung des Schmelzklebers.

88,0 g Polyester I, 67,4 g Polyester III, 38,8 g Polyester IV und 84,2 g Polyester V wurden unter Schutzgas bei 150 °C geschmolzen, homogenisiert und zur Entfernung eventueller Restfeuchte evakuiert; die OH-Zahl der Mischung betrug 20,2.

Zu 50 mmol(278 g) dieser Mischung wurden bei 120 °C 100 mmol (80,8 g) des unter (a) hergestellten Adduktes zugegeben; das Reaktionsgemisch wurde 1,5 h auf 180 °C erhitzt. Der NCO-Wert betrug danach weniger als 0,1%. Nach Zusatz von 1 Gew.-% (3,8 g) Dibutylzinndilaurat wurde abgekühlt und die Umsetzung beendet.

Beispiel 2.

a) Addukt aus TDI, gamma-Aminopropyltriethoxysilan und Butandiol-1,4.

In einem Dreihalskolben wurden unter Rühren und Feuchtigkeitsausschluß 108 mmol(37,6 g) TDI vorgelegt; innerhalb von 30 min wurden 108 mmol(9,7 g) Butandiol-1,4 sowie nach weiteren 30 min 23,9 g-(108 mmol) gamma-Aminopropyltriethoxysilan zugetropft. Nach weiteren 30 min war ein NCO-Wert von 5,9±0,3% erreicht.

b) Herstellung des Schmelzklebers.

88,0 g Polyester I, 67,4 g Polyester III, 38,8 g Polyester IV und 84,2 g Polyester V wurden unter Schutzgas bei 150 °C geschmolzen, homogenisiert und zur Entfernung eventueller Restfeuchte evakuiert; die OH-Zahl des Gemisches betrug 20,2. Zu 50 mmol(280 g) des Gemisches wurden bei 120 °C 100 mmol (71,2 g) des unter (a) hergestellten Adduktes zugegeben; das Gemisch wurde 1,5 h auf 180 °C erhitzt. Der NCO-Wert betrug danach weniger als 0,1%. Nach Zusatz von 1 Gew.-%(3,7 g) Dibutylzinndilaurat wurde abgekühlt und die Reaktion beendet.

Beispiel 3.

a) Addukt aus IPDI und gamma-Mercaptopropyltrimethoxysilan.

In einem Dreihalsrundkolben wurden unter Rühren und Feuchtigkeitsausschluß 100 mmol(22,2 g) IPDI und 100 mmol(19,6 g) gamma-Mercaptopropyltrimethoxysilan vorgelegt und innerhalb 1 h auf 130 °C erhitzt. Nach weiteren 2 h bei dieser Temperatur war der theoretische NCO-Wert von 10,1% erreicht, die Reaktion wurde beendet.

b) Herstellung des Schmelzklebers.

Unter Schutzgas und Rühren wurden bei 60 °C 100 mmol (65 g) PTHF 650 vorgelegt und mit 150 mmol(37,6 g) MDI versetzt; die Temperatur wurde auf 80 °C erhöht. Nach Erreichen des theoretischen NCO-Wertes von 16,4 (Ca. 1 h) wurden 100 mmol (373 g) Polyester II zugegeben; es wurde so lange gerührt, bis der NCO-Wert weniger als 0,1% betrug. Infolge der Viskositätszunahme der Reaktionsmischung kann hierbei eine Temperaturerhöhung zweckmäßig sein. Anschließend wurden 100 mmol (41,9 g) des unter (a) hergestellten Adduktes zugegeben und unter Temperaturerhöhung so lange gerührt, bis ein NCO-Wert von weniger als 0,1% erreicht war. Die Temperatur betrug dann zwischen 150 und 180 °C. Nach Zugabe von 1 Gew.-% (5,2 g) Dibutylzinndilaurat und Homogenisierung wurde abgekühlt und die Reaktion beendet.

Beispiel 4.

Unter Schutzgas und Rühren wurden bei 60 °C 50 mmol(50 g) PTHF 1000 bei 60 °C vorgelegt und zur Entfernung von Restfeuchtigkeit 30 min evakuiert. Hierzu wurden 100 mmol (25 g) MDI zugegeben und die Temperatur auf 80 °C erhöht. Nach ca. 1 h war der theoretische NCO-Wert erreicht. Anschließend wurden 100 mmol (37,3 g) Polyester zugegeben. Bei kontinuierlicher Temperaturerhöhung bis auf 120 °C wurde so lange gerührt, bis der NCO-Wert weniger als 0,1% betrug. Anschließend wurden 100 mmol (41,8 g) eines Adduktes gemäß Beispiel 3(a) zugegeben; unter Erhöhung der Temperatur auf 160 °C wurde so lange gerührt, bis der NCO-Wert weniger als 0,1% betrug. Nach Zugabe von 1 Gew.-% (4,9 g) Dibutylzinndilaurat und Homogenisierung wurde abgekühlt und die Reaktion beendet.

Beispiel 5.

Es wurde ein Schmelzkleber gemäß Beispiel 4 hergestellt, wobei anstelle des dort eingesetzten PTHF 1000 100 g PTHF 2000 verwendet wurden.

Beispiel 6.

a) Addukt aus IPDI und gamma-Aminoethylpropyldiethoxysilan.

In einem Rundkolben wurden unter Kühlung, Feuchtigkeitsausschluß und Rühren 105 mmol(23,3 g) IPDI vorgelegt und über einem Zeitraum von 60 min 105 mmol(20,0 g) gamma-Aminopropylmethyldiethoxysilan zugetropft, sodaß die Temperatur des Reaktionsgemisches 40 °C nicht überschritt. Nach weiteren 15 min unter Rühren erhielt man ein Produkt mit einem NCO-Wert von 9,7±0,5%.

b) Herstellung des Schmelzklebers.

Unter Schutzgas und Rühren wurden bei 120 °C 50 mmol(187 g) Polyester II vorgelegt und zur Entfernung von Restfeuchte 30 min evakuiert. Nach dem Abkühlen auf 80 °C wurden 100 mmol (25 g) 4,4-Diaminodiphenylmethan zugegeben. Nach ca. 1 h war der theoretische NCO-Wert erreicht; anschließend wurden 100 mmol (200 g) Polyamin zugegeben. Dabei wurde die Temperatur auf 140 °C erhöht. Nach 1 h war der NCO-Gehalt auf weniger als 0,1% abgesunken. Anschließend wurden 100 mmol (43,3 g) des unter (a) hergestellten Addukts zugegeben. Nach einstündigem Rühren bei 140 °C war der NCO-Gehalt auf weniger als 0,1% abgesunken. Nach Zugabe und homogener Verteilung von 1 Gew.-%(4,3 g) Dibutylzinndilaurat wurde abgekühlt und die Reaktion beendet.

Beispiel 7.

Unter Schutzgas und Rühren wurden bei 60 °C 50 mmol(50 g) Polypropylenglykol in einem Dreihalskolben vorgelegt und zur Entfernung von Restfeuchte 30 min evakuiert sowie mit 100 mmol (25 g) MDI versetzt. Bei 80 °C wurde so lange gerüht(ca. 1 h), bis der theoretische NCO-Wert von 5,6% erreicht war. Anschließend wurden 100 mmol(37,3 g) Polyester zugegeben; es wurde so lange gerührt, bis der NCO-Wert weniger als 0,1% betrug. Dabei wurde die Temperatur bis 140 °C erhöht. Anschließend wurden 100 mmol(41,8 g) eines Adduktes gemäß Beispiel 3 (a) zugegeben; es wurde so lange gerührt, bis der NCO-Gehalt weniger als 0,1% betrug. Dabei wurde die Temperatur auf 160 °C erhöht. Nach Zugabe von 1 Gew.-%(5,0 g) Dibutylzinndilaurat und Homogenisierung wurde abgekühlt und die Reaktion beendet.

Vergleichsbeispiel.

Alkoxysilanterminiertes Polyestergemisch.

a) Addukt aus IPDI- und gamma-Aminopropyltriethoxysilan.

In einem Dreihalskolben wurden 380 mmol(62,8 g) IPDI vorgelegt. Unter Feuchtigkeitsausschluß und Kühlung wurden 280 mmol(62,6 g) gamma-Aminopropyltriethoxysilan über einen Zeitraum von 60 min unter Rühren zugetropft; die Innentemperatur wurde auf maximal 40 °C gehalten. Nach weiteren 15 min unter Rühren erhielt man ein Produkt mit einem NCO-Wert von 9,0±0,5%.

b) Herstellung des Schmelzklebers.

100 mmol(544 g) eines Polyestergemisches aus 173 g Polyester I, 130 g Polyester III, 74 g Polyester IV und 167 g Polyester V wurden unter Schutzgas bei 200 °C homogen vermischt und ca. 1 min evakuiert. Nach dem Abkühlen auf 150 °C wurden 270 mmol (126 g) des unter (a) hergestellten Adduktes aus IPDI und gamma-Aminopropyltriethoxysilan zugegeben. Nach 1 h war der NCO-Gehalt auf weniger als 0,1% abgesunken. Anschließend wurden 1 Gew.-% (6,7 g) untergemischt und homogenisiert; das Reaktionsgemisch wurde abgekült und die Reaktion beendet.

Die klebetechnischen Eigenschaften der Schmelzkleber der Erfindung und des Vergleichsbeispiels sind in der folgenden Tabelle zusammengefaßt. Die Schmelzkleber der Erfindung weisen insbesondere eine verbesserte Reißfestigkeit und Reißdehnung sowie Zugscherfestigkeit an Kunststoffen auf.

Tabelle

| | Vergleichsbeispiel | Beispiel Nr. | | | | | |
|---|---|---|---|---|---|---|---|
| | | 1 | 2 | 3 | 4 | 5 | 7 |
| Zugscherfestigkeit(Holz) bei RT, in Anl. an DIN 53283 nach 7 Tagen [MPa] | 3,9 | 7,2 | 6,6 | 11,2 | 10,4 | 9,8 | 8,9 |
| Zugscherfestigkeit(Holz) bei 100 °C, in Anl. an DIN 53283 und 53286 nach 7 Tagen [MPa] | 1,2 | 1,0 | 0,8 | 1,6 | 1,4 | 1,1 | 1,0 |
| Wärmestandfestigkeit [°C] | >200 | >200 | >200 | >200 | >200 | >200 | >200 |
| Viskosität nach ASTM D 3236 [Pas] bei °C | 4,5 (180) | 17 (200) | 9,3 (200) | 8,8 (180) | 8,0 (170) | 8,5 (180) | 7,2 (170) |
| Reißfestigkeit nach DIN 53455 [MPa] | 3,9 | 7,6 | 5,8 | 22 | 21 | 15 | 14 |
| Reißdehnung nach DIN 53455 [%] | 190 | 700 | 900 | 520 | 450 | 600 | 580 |
| Zugscherfestigkeit*) bei RT, in Anl. an DIN 53283 nach 7 Tagen [MPa] | | | | | | | |
| Substrat: PVC | 2,7 | 3,3 | 3,1 | 8,3 | 8,0 | 8,1 | 8,2 |
| " Polycarbonat | 3,1 | 4,8 | 4,6 | 10,2 | 9,8 | 9,6 | 9,1 |
| " Acrylglas | 0,8 | 0,7 | 0,8 | 2,2 | 1,9 | 2,0 | 1,8 |
| " Polyamid | | | | | | | |
| " Polypropylen | | | | | | | |

*) mit Primer gemäß P 37 23 932.5

## Ansprüche

1. Alkoxysilanterminierte, feuchtigkeitsvernetzende Schmelzkleber, erhältlich durch Umsetzung von

a) NCO-terminierten Silanverbindungen der Formel I

$OCN-R^1-NHCO-(O-R^2-O-CONH-R^3-NHCO)_m-X-(CH_2)_n-Si(R^4)_p(OR^5)_{3-p}$ (I)

in der

$R^1$ und $R^3$ einen Rest aus der von acyclischem oder cyclischem Alkylen mit 5 bis 14 Kohlenstoffatomen, Arylen, Diarylenalkan und dialkylensubstituiertem Aryl gebildeten Gruppe,

$R^2$ einen Alkylenrest mit 2 bis 12 Kohlenstoffatomen,

$R^4$ eine Alkylgruppe mit 1 bis 4 Kohlenstoffatomen, $R^5$ einen Rest aus der von Alkyl mit 1 bis 4 Kohlenstoffatomen und Alkoxyalkylen mit 2 bis 5 Kohlenstoffatomen,

m die Zahl 0 oder 1,

n eine Zahl von 1 bis 4,

p die Zahl 0, 1 oder 2 und

X eine Gruppe der Formel -S- oder $-NR^6-$, in der $R^6$ Wasserstoff, Alkyl mit 1 bis 4 Kohlenstoffatomen, Aminoethylen, Aryl oder einen Rest der Formel II

$-(CH_2)_n-Si(R^4)_p(OR^5)_{3-p}$ (II)

in der $R^4$, $R^5$, m und p wie oben definiert sind,

bedeuten,

mit

b) linearen OH- und/oder $NH_2$-terminierten difunktionellen Polymeren mit OH- bzw. $NH_2$-Zahlen im Bereich von 6 bis 20, insbesondere 8 bis 15, erhältlich durch Umsetzung von linearen OH- und/oder $NH_2$-terminierten Polyestern, Polyethern und/oder Polyurethanen mit Diisocyanaten der Formel III

$OCN-R^7-NCO$ (III)

in der $R^7$ wie $R^1$ und $R^3$ definiert ist, bzw. Mischungen derselben,

in Molverhältnissen von OH- und/oder $NH_2$-Gruppen der difunktionellen Polymeren zu NCO-Gruppen der NCO-terminierten Silanverbindungen der Formel I von 0,9:1 bis 2:1, insbesondere etwa 1:1.

2. Alkoxysilanterminierte, feuchtigkeitsvernetzende Schmelzkleber nach Anspruch 1, dadurch gekennzeichnet, daß $R^1$, $R^3$ und $R^7$ Reste aus der von Toluylen, Hexamethylen, Naphthylen, Xylylen, Cyclohexylen, Diphenylenmethan und Isophoronylen gebildeten Gruppe sind.

3. Alkoxysilanterminierte, feuchtigkeitsvernetzende Schmelzkleber nach Anspruch 1 oder 2, dadurch gekennzeichnet, daß $R^1$ und $R^3$ Isophoronylen- oder Toluylengruppen und $R^7$ eine Diphenylenmethangruppe ist.

4. Alkoxysilanterminierte, feuchtigkeitsvernetzende Schmelzkleber nach mindestens einem der Ansprüche 1 bis 3, dadurch gekennzeichnet, daß $R^4$ und $R^5$ jeweils Methyl und/oder Ethyl, n die Zahl 3, p die Zahl 0 oder 1 und X Imino- oder Thiogruppe sind.

5. Alkoxysilanterminierte, feuchtigkeitsvernetzende Schmelzkleber nach mindestens einem der Ansprüche 1 bis 4, dadurch gekennzeichnet, daß die linearen OH-terminierten Polyester OH-Zahlen von 5 bis 200, insbesondere von 10 bis 100 und besonders bevorzugt von 15 bis 60 aufweisen.

6. Alkoxysilanterminierte, feuchtigkeitsvernetzende Schmelzkleber nach mindestens einem der Ansprüche 1 bis 4, dadurch gekennzeichnet, daß die linearen OH-terminierten Polyether aus der von Polyethylenglykol, Polypropylenglykol und Polytetrahydrofuran gebildeten Gruppe mit Zahlenmitteln der Molmassen von 400 bis 5000 ausgewählt sind.

7. Alkoxysilanterminierte, feuchtigkeitsvernetzende Schmelzkleber nach mindestens einem der Ansprüche 1 bis 4, dadurch gekennzeichnet, daß die linearen amin-terminierten Polyether Diamino-polypropylenglykol mit Zahlenmitteln der Molmassen von 200 bis 3000 sind.

8. Alkoxysilanterminierte, feuchtigkeitsvernetzende Schmelzkleber nach mindestens einem der Ansprüche 1 bis 7, dadurch gekennzeichnet, daß man Umsetzungsprodukte von Diisocyanaten der Formel III, in der $R^7$ wie oben definiert ist, mit Gemischen von

a) linearen OH-terminierten Polyestern und

b) linearen OH-terminierten Polyethern

in Gewichtsverhältnissen von a:b von 20:80 bis 99:1, vorzugsweise 50:50 bis 90:10 und insbesondere 80:20 bis 88:12 einsetzt.

9. Verwendung der alkoxysilanterminierten, feuchtigkeitsvernetzenden Schmelzkleber nach mindestens einem der Ansprüche 1 bis 8 als Klebe- bzw. Dichtmassen.

Europäisches Patentamt

# EUROPÄISCHER RECHERCHENBERICHT

Nummer der Anmeldung

EP 89 11 4338

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 096 250 (DYNAMIT NOBEL) * Ansprüche 1-3,8; Seite 4, Zeilen 7-21; Seite 5, Zeilen 1-5; Seite 6, Zeilen 1-36; Seite 8, Zeilen 16-21 * | 1-7,9 | C 08 G 18/10<br>C 08 G 18/12<br>C 08 G 18/80<br>C 09 J 175/04 |
| X | EP-A-0 202 491 (DYNAMIT NOBEL) * Ansprüche 1-3; Seite 4, Zeilen 11-35; Seite 5, Zeilen 6-13; Seite 7, Zeile 10 - Seite 8, Zeile 25; Seite 9, Zeilen 23-36 * &DE-A-3 518 357 (Kat. D) | 1-5 | |
| A | US-A-4 345 053 (S.D. RIZK et al.) * Ansprüche 1-8,18-20; Spalte 4, Zeilen 38-68; Spalte 5, Zeilen 43-56 * | 1 | |
| A | EP-A-0 268 559 (CIBA-GEIGY) * Ansprüche 1,2,5,7,8; Seite 4, Zeilen 33-46; Seite 5, Zeilen 9-11 * | 1 | |
| | | | RECHERCHIERTE SACHGEBIETE (Int. Cl.5) |
| | | | C 08 G<br>C 09 J |

Der vorliegende Recherchenbericht wurde für alle Patentansprüche erstellt

| Recherchenort | Abschlußdatum der Recherche | Prüfer |
|---|---|---|
| DEN HAAG | 06-10-1989 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)